# EUROPEAN PATENT APPLICATION

(11) **EP 3 246 838 A1**
(43) Date of publication of application: **22.11.2017**
(21) Application number: 16170739.3
(22) Date of filing: 20.05.2016
(51) Int. Cl.: G06F 21/31, G06F 21/40, H04L 29/06

(54) **DATA-PROCESSING SYSTEM, METHOD OF OPERATING SUCH, COMPUTER PROGRAM, AND COMPUTER-READABLE STORAGE MEDIUM**

(71) Applicant: SC-IT GmbH, 71229 Leonberg (DE)
(72) Inventor: Peter, Tobias, 71277 Rutesheim (DE)
(74) Representative: Meyer zu Bexten, Elmar

(57) **Abstract**

For IT staff, it is an easy task to eavesdrop on an arbitrary user's email, spy out her browsing history, or inspect any personal files she might have saved. Besides the possibility of indiscretion on the part of in-house administrative personnel, users of networked data-processing systems are in danger of external observers tracking their assumedly private browsing sessions or analyzing the traffic of search engines and online retailers. Finally, state-of-the-art data analytics enable owners and operators to draw far-reaching conclusions about visitors to their websites. Especially executives and other bearers of secrets are faced with the problem of mitigating the aforementioned risks when operating any client computer connected to their corporate intranet or the Internet.

Solution

Method of operating a data-processing system (10) comprising
decrypting (1) a non-volatile computer-readable storage medium (12) attached to a client computer (11) by a user of the system (10),
executing (2) on the client computer (11) a computer program stored on the storage medium (12),
on inquiry by the computer program, authenticating (3) the storage medium (12) through a gateway server (13) by means of a cryptographic key stored on the storage medium (12),
establishing (4) a connection and submitting credentials of the user from the client computer (11) to a terminal server (14) via the gateway server (13),
verifying (5) the credentials through the terminal server (14), and
logging (6) the user on to the terminal server (14).

## Description

### Technical Field

The invention pertains to the field of remote desktop virtualization. More specifically, the invention pertains to the field of presentation virtualization.

### Background Art

In the field of information technology, by desktop virtualization is meant any software technology that separates a desktop environment and associated application software from the physical client device that is used to access it. Remote desktop virtualization or virtual desktop infrastructure (VDI) implementations operate in a client-server computing environment. Application execution takes place on a remote operating system which communicates with the local client device over a network using a remote display protocol through which the user interacts with applications. All applications and data used remain on the remote system with only display, keyboard, and mouse information communicating with the local client device, which may be a conventional personal computer (PC), thin client device, tablet, smartphone, connected car, or even smartwatch or other wearable. Herein, virtualization is employed to present independent instances to multiple users, and requires a strategic segmentation of the host server and presentation at some layer of the host's architecture. Various pertinent techniques are studied and revised in AGARWAL, Ankit, et al. Reviewing the world of virtualization. Intelligent Systems, Modelling and Simulation (ISMS), 2012 Third International Conference on. February 2012, p.554-557.

US 2011307614 A (BERNARDI ARA [US]; ALLADI MAHADEV K [US]; BEN-SHACHAR IDO [US]; SCHMIEDER WILHELM R [US]; MICROSOFT) 15.12.2011 discloses techniques for efficient remote presentation session connectivity and routing. In an embodiment, the roles of a remote presentation session deployment involved in receiving a connection from a client and determining a virtual machine (VM) to serve the client's remote presentation session are consolidated on one or more servers of the deployment that host such VMs. When this consolidated role receives a connection set up communication from a client, it uses information local to it and its server to determine a VM to serve the remote presentation session. Where the deployment comprises a plurality of such servers, the consolidated role may communicate with an inter-server connection broker to determine a different server that will conduct the remote presentation session.

### Summary of invention

The invention provides a secure desktop environment.

### Technical Problem

For IT staff, it is an easy task to eavesdrop on an arbitrary user's email, spy out her browsing history, or inspect any personal files she might have saved. Besides the possibility of indiscretion on the part of in-house administrative personnel, users of networked data-processing systems may be in danger of external observers tracking their assumedly private browsing sessions or analyzing the traffic of search engines and online retailers for identification. Finally, state-of-the-art data analytics enable owners and operators to draw far-reaching conclusions about visitors to their websites. Especially executives and other bearers of secrets are faced with the problem of mitigating the aforementioned risks when operating any client computer connected to their corporate intranet or the Internet.

### Solution to Problem

This problem is solved by a method of operating a data-processing system according to Claim 1, a data-processing system according to Claim 10, a computer program according to Claim 12, and a storage medium according to Claim 13.

### Advantageous effect of invention

An embodiment of the invention allows senior management and trade unionists to conduct critical business in an anonymous environment. Virtually invisible to their company's IT, they are put in a position to send and receive emails, store trusted data in an encrypted container, or display sensitive Web content without risking information leakage or industrial espionage. Even highly confidential correspondence - such as with tax advisors, recruiters, or outside counsel - thus remains well-protected from internal and external attackers.

### Brief description of drawings

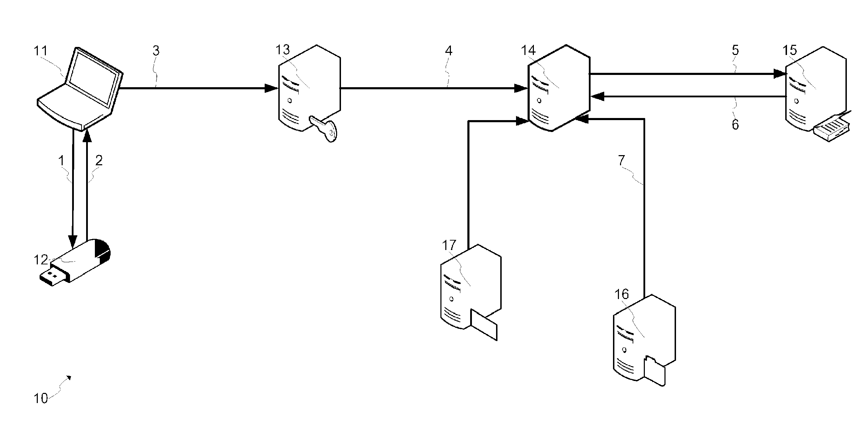

The sole Figure serves to illustrate the functional principle of the invention.

### Description of embodiments

The proposed system (10) is based on three-factor authentication, wherein the possession factor takes the form of an encrypted universal serial bus (USB) flash drive or similar non-volatile computer-readable storage medium (12) containing a computer program and unique cryptographic key of adequate length. To access the secure environment from an arbitrary client computer (11), a user of the system (10) simply attaches this storage medium (12) to the computer (11) and decrypts (1) it by means of her personal identification number (PIN) or biometrics authentication based on, for instance, fingerprint, palm vein, face, hand geometry, iris, or retina recognition.

On said client computer (11), she then executes (2) the decrypted program, which attempts to connect to the provider of the system (10) via a preconfigured gateway server (13). The latter authenticates (3) the storage medium (12) by means of its key and - if successful - establishes (4) the connection between the client computer (11) and an associated terminal server (14) operated by the provider.

At this point, the client computer (11) retrieves the user's name and a first password from the storage medium (12). (It is well understood that an alternative embodiment may instead require the user to enter her credentials manually into the client computer.) Via the gateway server (13), these credentials, constituting a first knowledge factor of the authentication mechanism, are submitted to the terminal server (14). Only upon verification (5) of these credentials by means of an active directory (AD) domain controller or similar directory server (15) is the user logged on (6) to the terminal server (14) and allowed to enter a second password - and thus knowledge factor - to decrypt her personal data store (16).

To protect the passwords and other payload against malicious packet analysis in transit, the connection takes the form of an encrypted tunnel compliant with the secure shell (SSH) protocol. As a variant, transport layer security (TLS) or similar could be employed to tunnel an entire network stack, thus constituting what is known in the art as a virtual private network (VPN). Once the tunnel is established, the user may access her desktop, mail server (17), and further services according to the remote desktop protocol (RDP) as laid out in OLZAK, Thomas, et al. Microsoft virtualization: master Microsoft server, desktop, application, and presentation virtualization. Edited by MAJORS, Kenneth. Oxford: Syngress, 2010. ISBN 1597494313. p.317-375. , X Window System (X11), or similar proprietary or open standard. Such services may be complemented by a bundled productivity suite comprising word processing, spreadsheet, presentation, and notetaking applications.

In a preferred embodiment, messages exchanged via the mail server (17) are protected by means of e-mail encryption. Such protection typically relies on public-key cryptography, in which the user publishes a public key that others can use to encrypt messages to her, while the system (10) maintains a private key she can use to decrypt such messages or to digitally encrypt and sign messages she sends. Suitable protocols for e-mail encryption include PGP, S/MIME, TLS, or Bitmessage.

### Industrial applicability

The invention is applicable, *interalia,* throughout the information technology and telecommunications industries.

### Reference signs list

The following reference key contains all the reference signs appearing in the drawing together with the designation of the features which they indicate.
- 1: Decrypting a non-volatile computer-readable storage medium (12) attached to a client computer (11) by a user of the system (10)
- 2: Executing on the client computer (11) a computer program stored on the storage medium (12)
- 3: On inquiry by the computer program, authenticating the storage medium (12) through a gateway server (13) by means of a cryptographic key stored on the storage medium (12)
- 4: Establishing a connection and submitting credentials of the user from the client computer (11) to a terminal server (14) via the gateway server (13)
- 5: Verifying the credentials through the terminal server (14)
- 6: Logging the user on to the terminal server (14)
- 7: Decrypting a data store (16) of the user through the terminal server (14) by means of a second password
- 10: Data-processing system
- 11: Client computer
- 12: Non-volatile computer-readable storage medium
- 13: Gateway server
- 14: Terminal server
- 15: Directory server
- 16: Data store
- 17: Mail server

### Citation list

The following literature is cited throughout this document.

### Patent literature

US 2011307614 A (BERNARDI ARA [US]; ALLADI MAHADEV K [US]; BEN-SHACHAR IDO [US]; SCHMIEDER WILHELM R [US]; MICROSOFT) 15.12.2011

### Non-patent literature

AGARWAL, Ankit, et al. Reviewing the world of virtualization. Intelligent Systems, Modelling and Simulation (ISMS), 2012 Third International Conference on. February 2012, p.554-557.

OLZAK, Thomas, et al. Microsoft virtualization: master Microsoft server, desktop, application, and presentation virtualization. Edited by MAJORS, Kenneth. Oxford: Syngress, 2010. ISBN 1597494313. p.317-375.

## Claims

1. Method of operating a data-processing system (10) comprising
decrypting (1) a non-volatile computer-readable storage medium (12) attached to a client computer (11) by a user of the system (10),
executing (2) on the client computer (11) a computer program stored on the storage medium (12),
on inquiry by the computer program, authenticating (3) the storage medium (12) through a gateway server (13) by means of a cryptographic key stored on the storage medium (12),
establishing (4) a connection and submitting credentials of the user from the client computer (11) to a terminal server (14) via the gateway server (13), verifying (5) the credentials through the terminal server (14), and
logging (6) the user on to the terminal server (14).

2. Method according to Claim 1 wherein
the credentials comprise a distinguished name of the user and a first password and are verified by means of a directory server (15), particularly an active directory.

3. Method according to Claim 1 or Claim 2 comprising,
upon verifying (5) the credentials, decrypting (7) a data store (16) of the user through the terminal server (14) by means of a second password.

4. Method according to any of the preceding claims wherein
the storage medium (12) is attached via a universal serial bus of the client computer (11).

5. Method according to any of the preceding claims wherein
the storage medium (12) is decrypted (1) by means of a personal identification number of the user.

6. Method according to any of the preceding claims wherein
the connection is encrypted.

7. Method according to any of the preceding claims wherein
the connection conforms to a remote desktop protocol.

8. Method according to any of the preceding claims wherein
the connection is tunneled.

9. Method according to Claim 8 wherein
the tunneling is effected by a secure shell.

10. Data-processing system (10) comprising means for carrying out the method according to any of the preceding claims.

11. System (10) according to Claim 10 comprising
a mail server (17) connected to the terminal server (14).

12. Computer program adapted to perform the method according to any of Claim 1 to Claim 9.

13. Non-volatile computer-readable storage medium (12) comprising the program according to Claim 12.

14. Storage medium (12) according to Claim 13 comprising
solid-state storage.

15. Storage medium (12) according to Claim 14 wherein
the storage is a flash memory.

## Amended claims

### Amended claims in accordance with Rule 137(2) EPC.

1. Method of operating a data-processing system (10) comprising decrypting (1) a non-volatile computer-readable storage medium (12) attached to a client computer (11) by a user of the system (10),
executing (2) on the client computer (11) a computer program stored on the storage medium (12),
on inquiry by the computer program, authenticating (3) the storage medium (12) through a gateway server (13) by means of a cryptographic key stored on the storage medium (12),
establishing (4) a connection by the computer program and submitting credentials of the user from the client computer (11) to a terminal server (14) via the gateway server (13),
verifying (5) the credentials through the terminal server (14), and
logging (6) the user on to the terminal server (14).

2. Method according to Claim 1 wherein
the credentials comprise a distinguished name of the user and a first password and are verified by means of a directory server (15), particularly an active directory.

3. Method according to Claim 1 or Claim 2 comprising,
upon verifying (5) the credentials, decrypting (7) a data store (16) of the user through the terminal server (14) by means of a second password.

4. Method according to any of the preceding claims wherein
the storage medium (12) is attached via a universal serial bus of the client computer (11).

5. Method according to any of the preceding claims wherein
the storage medium (12) is decrypted (1) by means of a personal identification number of the user.

6. Method according to any of the preceding claims wherein
the connection is encrypted.

7. Method according to any of the preceding claims wherein
the connection conforms to a remote desktop protocol.

8. Method according to any of the preceding claims wherein
the connection is tunneled.
